(19) Europäisches Patentamt
European Patent Office
Office européen des brevets

(11) EP 3 998 558 B1

(12) **EUROPEAN PATENT SPECIFICATION**

(45) Date of publication and mention of the grant of the patent:
**24.06.2026 Bulletin 2026/26**

(21) Application number: **20835982.8**

(22) Date of filing: **14.04.2020**

(51) International Patent Classification (IPC):
***G06Q 10/00*** *(2026.01)* ***B61L 27/53*** *(2022.01)*
***G06Q 50/04*** *(2012.01)* ***G06Q 10/10*** *(2023.01)*
***G06Q 10/0639*** *(2023.01)* ***G06Q 10/20*** *(2023.01)*
***G06N 5/022*** *(2023.01)* ***G06N 5/025*** *(2023.01)*
***G05B 23/02*** *(2006.01)* ***G06N 5/02*** *(2023.01)*
***G06Q 10/063*** *(2023.01)*

(52) Cooperative Patent Classification (CPC):
**G06Q 10/20; B61L 27/53; G05B 23/0229; G05B 23/0275; G06N 5/02; G06Q 10/063; G06Q 50/04; G06Q 50/40**

(86) International application number:
**PCT/JP2020/016428**

(87) International publication number:
**WO 2021/005861 (14.01.2021 Gazette 2021/02)**

(54) **FAULT FINDING SUPPORT SYSTEM**

FEHLERDIAGNOSE UNTERSTÜTZUNGSSYSTEM

SYSTÈME D'ASSISTANCE AU DIAGNOSTIC DE PANNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.07.2019 JP 2019128158**

(43) Date of publication of application:
**18.05.2022 Bulletin 2022/20**

(73) Proprietor: **Hitachi, Ltd.**
**Tokyo 100-8280 (JP)**

(72) Inventor: **KONO, Toshiaki**
**Tokyo 100-8280 (JP)**

(74) Representative: **Mewburn Ellis LLP**
**Aurora Building**
**Counterslip**
**Bristol BS1 6BX (GB)**

(56) References cited:
**EP-A1- 2 778 818**
**WO-A1-2018/135171**
**WO-A1-2019/130469**
**JP-A- 2009 049 112**
**JP-A- 2009 301 481**
**JP-A- H06 274 300**
**JP-A- H09 146 631**
**US-A1- 2007 226 540**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 998 558 B1

## Description

### Technical Field

The present invention relates to a fault finding support system which supports work specifying a fault location in equipment.

### Background Art

In many fields of infrastructure, railways, industrial equipment, medical equipment, and the like, it is necessary to maintain predetermined performance by continuously performing maintenance after the introduction of assets. The status of a target asset is collected, the presence of abnormality and problems are analyzed and diagnosed, and an appropriate maintenance work is applied.

In asset diagnosis, it is a generalized method that, by integrating a result of examination of the target asset by a maintenance worker and a state of equipment obtained by a sensor, a fault location is gradually narrowed and equipment in which fault occurs and performing of a process such as replacement, repair, or restoration is required is identified based on worker's knowledge about target asset and general engineering knowledge.

With the development of information technology in recent years, it becomes easy collect conditions of an asset by a sensor and to use IT technology, such as an asset diagnosis technology to grasp a current state of the asset, and a diagnosis support using the above is considered. Also, by instructing a worker of an appropriate examination location and examination contents, a diagnosis support has been in practical use in which lack of target asset knowledge and engineering knowledge of the worker is complemented and an efficient examination order is supported.

In order to realize a fault finding support system for such a diagnosis support, a system can be considered which includes, for example, a fault location candidate and an examination means for giving a worker the guidance about a fault location, and a guide providing means having failure knowledge data in which a relationship between a phenomenon and the faults are arranged and showing them systematically by a certain method.

Patent Literature 1 discloses an example which is a diagnosis support system having fault knowledge data and a guide providing means. According to Patent Literature 1, a result of a fault mode analysis is expressed by graph data. Further, with use of single fault knowledge data in which the graph data and an examination method instruction are linked, the diagnosis support is performed.

US 2007/226540 A1 describes a diagnostic system for localizing faults in diagnostics in a workshop. The diagnostic system takes into account both trivial and costly intermittent fault situations. It is characterized by a structured module concept for the software architecture. Division into localization of quasi-steady-state and intermittent faults is carried out by reference to classification of the diagnostic tasks. The modular software architecture with strict separation of protected data and imprecise information supports the guided troubleshooting process.

EP 2 778 818 A1 provides a method of identifying faults in a target system. The method includes steps of (a) providing a failure knowledge database for the target system, wherein the failure knowledge database specifies a plurality of failure mode and symptom data records; (b) receiving an incident report specifying a particular component and a reported failure symptom; (c) identifying candidate failure mode and symptom data records which may explain the incident report by reference to the failure knowledge database; (d) calculating respective confidence values for the candidate data records; (e) comparing the calculated confidence values; and (f) generating a maintenance instruction for the target system, the instruction pertaining to at least the candidate data record having the highest calculated confidence value.

### Citation List

#### Patent Literature

PTL 1: Japanese Patent Application Laid-Open No. 2014-174983

### Summary of Invention

#### Technical Problem

When a fault diagnosis is performed with use of a diagnosis support system in which the fault location candidates or an examination location candidates is presented to a worker as required, there is a case where, without examining all the possible fault candidates or examination location candidates, the worker terminates the examination when the worker thinks appropriate and determines the fault location. As a result, even when another fault with a high possibility exists, the examination may not reach there and a mistaken fault diagnosis may be performed. Moreover, even if a mistaken repair based on the diagnosis is done, a function relevant to the fault may not be used immediately, or a misdiagnosis may not be recognized since the fault itself is the one occurring intermittently.

Such a misdiagnosis by an unsuitable close of the examination may not only cause recurrence of the fault but also spoil accuracy of a fault record. Further, it may bring about errors to a maintenance conducting plan based on reliability data and, in the fault diagnosis support system of the present invention, to a fault diagnosis result based on reliability data.

In view of the above, an object of the present invention is to provide a fault finding support system which enables a worker to decide appropriately the termination of the diagnosis by allowing the worker to judge whether or not there remains an item related to a derived situation and having a high risk to change the diagnosis result.

Solution to Problem

As described above, in the present invention, there is provided a fault finding support system according to claim 1.

Advantageous Effects of Invention

With use of the present invention and confirming that there is no examination required items left in unexamined items, it becomes possible to terminate the fault examination, to prevent a misdiagnosis due to insufficient examination as well as presentation of the diagnosis result whose reliability is low, and to perform fault examination with minimum necessity processes. Moreover, with the improvement in accuracy and reliability of the diagnosis result, it becomes possible to make a suitable maintenance plan based on the fault record and to update the fault knowledge and to improve performance of the fault finding support based on it.

Brief Description of Drawings

Fig. 1 is a diagram showing an example of the configuration of a fault finding support system of the present invention;
Fig. 2 is a diagram showing an example of fault knowledge data D1 to be recorded in a fault knowledge database DB1;
Fig. 3 is a diagram showing structure development of a passenger car door of a railway as an example of an asset;
Fig. 4 is a diagram showing a relationship in Fig. 2 in a partially illustrated manner;
Fig. 5 is a diagram in which overall description of a source node and a destination node in a graph format;
Fig. 6 is a diagram showing the relationship in Fig. 2 in an entirely illustrated manner;
Fig. 7 is a diagram showing an example of a process flow of an examination procedure creation unit 2;
Fig. 8 is a diagram showing an example of a fault claim report;
Fig. 9 is a diagram showing an example of a candidate presenting screen;
Fig. 10 is a diagram showing an example of a confirmation check screen;
Fig. 11 is a diagram showing an example of a screen on which a check required location is presented;
Fig. 12 is a diagram showing an example of a process of a diagnosis validity judgment unit 3; and
Fig. 13 is a diagram showing an example of a screen on which a check required location is presented.

Description of Embodiment

Hereafter, embodiments of the present invention will be described with reference to the drawings.

[Embodiment 1]

As a fault finding support system of Embodiment 1 for solving the problem of the present invention, there are used: fault knowledge data in which knowledge about a fault of a target asset etc. is recorded; an examination procedure creation unit which gives priority of examinations etc. to fault examination knowledge and, also, creates instruction contents for a worker according to a progress of the examination; a diagnosis HMI which shows the examination procedure to the worker and also, accepts an input of an examination status of the worker and transmits an examination process to the examination procedure creation unit; and a diagnosis validity judgment unit which judges validity of a diagnosis result and instructs continuation or termination of the examination.

Fig. 1 is a diagram showing an example of the configuration of a fault finding support system of the present invention. If expressed in terms of functions of a calculation part, it can be said that the fault finding support system 1 including a computer has an examination procedure creation unit 2 and a diagnosis validity judgment unit 3, and also includes a diagnosis HMI 5 which is an interface of input and output, and a database DB which holds various data. In Fig. 1, as the various databases DB, there are provided a fault knowledge database DB1 which stores fault knowledge data D1; a diagnosis data database DB2 which stores diagnosis data D2; and a fault examination result data database DB3 which stores fault examination result data D3. Hereafter, configurations and functions of respective parts will be explained according to the flow of processing.

Also, the present invention is not limited to a specific asset, a diagnostic technique, and an analysis technique, but the following description will be made by taking the diagnosis of a passenger car door of a railway as an example.

The fault knowledge database DB1 holds, as the fault knowledge data D1, a structure of a target asset 4, a fault mode, a relationship between a function fault and the fault mode, a relationship between the function fault and a fault effect, and a relationship between a phenomenon observed at the time of the fault and the fault mode. In addition, in the fault knowledge data D1, it is not necessity to record the fault knowledge of the entire target asset 1 on a network of a single relationship, and there may be a case where the fault knowledge created for each part of the structure or function of the knowledge concerned is stored. Moreover, data showing structure development of the entire target asset is also recorded.

An example of the fault knowledge data D1 recorded in the fault knowledge database DB1 is shown in Fig. 2. Concerning the fault knowledge data D1, description is given, while associating items of a target part D12 to which part ID (D11) is attached, a fault mode D13, a fault cause D14, and a fault effect D15. Moreover, data showing structure development of an asset (in this example, a passenger car door of a railway) shown in Fig. 3 is recorded in the fault knowledge data D1.

For example, the asset of Fig. 3 illustrates that, in the fault knowledge database DB1 of Fig. 2, with respect to a door being a part (D12) to which P1 is given as a part ID (D11), the door P1 includes a door rail P2, a door plate P3, an actuator P4, and an air pipe P7 as parts which form the door and, among these, an actuator P4 includes a piston P5, a cylinder P6, and a regulating valve P8.

In the fault knowledge data D1 to be recorded in the fault knowledge database DB1 of Fig. 2, with respect to various kinds of parts in the large and small relationship or an upper and lower relationship, part IDs in items of D11 and names of parts forming the equipment in items of D12 are described in a comprehensive manner.

Moreover, in the fault knowledge data D1 to be recorded in the fault knowledge database DB1 of Fig. 2, conceivable fault modes for respective parts are enumerated in the item D13. Such fault modes correspond to respective fault mode IDs. Further, they are affixed with scores based on, for example, occurrence probability of the bracketed fault mode. According to the example shown in Fig. 2, a fault mode ID M1.1.1 of the door P1 represents "Door does not open" having a score of 60, a fault mode ID M1.1.2 represents "Open time is long" having a score of 79, and a fault mode ID M1.1.3 represents "Opening time is short" having a score of 40. Such information is described with regard to each part.

Moreover, in the fault knowledge data D1 to be recorded in the fault knowledge database DB1 of Fig. 2, fault effect information D14 related to each fault mode of each part is described. For example, the fault effect for "Door does not open" having M1.1.1 as a fault mode ID of the door P1 is "Passenger cannot get on and off train" affixed with E1.1.1 as a fault effect ID and, in this case, information such as a safety effect is low and a practical effect is high is given additionally. Further, the fault effect for "Opening time is long" havingM1.1.2 as a fault mode ID of the door P1 is "Service delay" affixed with E1.1.2 as a fault effect ID and, in this case, information such as a safety effect is low and a practical effect is medium is given additionally. Moreover, the fault effect for "Opening time is long" having M1.1.3 as a fault mode ID of the door P1 is "Opening time is short" affixed with E1.1.3 as a fault effect ID and, in this case, information such as a safety effect is low and a practical effect is medium is given additionally.

Also, in the fault knowledge data D1 to be recorded in the fault knowledge database DB1 of Fig. 2, fault cause information D15 related to each fault mode of each part is described. For example, the fault cause for "Door does not open" having M.1.1 as a fault mode ID of the door P1 is "Door plate does not move" affixed with C1.1.1 as a fault cause ID. Moreover, the fault cause for "Opening time is long" having M1.1.2 as a fault mode ID is "Door open detection fault" affixed with C1.1.2 as a fault cause ID, or "Door plate moves slowly" affixed with C1.1.3 as a fault cause ID. Moreover, the fault cause for "Opening time is long" having M1.1.3 as a fault mode of the door P1 is "Door plate moves fast" affixed with C1.1.4 as a fault cause ID. In addition, there may be two or more fault causes for a fault mode.

Thus, each line of the fault knowledge data D1 shown in Fig. 2 shows the combination of target parts D11 and D12, the fault mode D13, the fault effect D14, and the fault cause D15. According to the present invention, they are considered to be small units of the fault knowledge. In this regard, by adding the relationship between the fault cause D15 and the fault effect D14 among elements in the fault knowledge data D1, it becomes possible to describe what factor causes the fault effect D14. With respect to the fault effect D14 occurring to a certain part, which fault mode causes the fault effect D14 and, further, which fault cause D15 causes the fault mode will be described as relationship among IDs in the fault knowledge data D1 (fault mode ID, fault effect ID, and fault cause ID).

Moreover, between different parts also, when failure occurs in a part providing a lower rank function, a chain of cause and effect where its failure effect leads to failure cause D15 of a higher order function can be described. For example, in Fig. 3, a failure of the piston P5 is the failure effect D14 of the actuator P4, and the piston P5 is the failure cause D15 in view of the actuator P4.

Moreover, on a table in Fig. 2, a score is given to each fault mode. The score is calculated based on a past history of fault occurrence, and a high score shows that the possibility of fault occurrence is high. In this regard, it is conceivable to set it, for example, in proportion to the past fault occurrence rate.

With respect to part of the fault knowledge data of Fig. 2, Fig. 4 shows this relationship in a graph format. Fig. 4 shows the relationship in Fig. 2 in a diagram. Here, a door P1, a door rail P2, and a door plate P3 only are illustrated. These parts are defined as part nodes in Fig. 4.

Among these, the fault effects related to the door P1 are "Passenger cannot get on and off train E1.1.1", "Service delay E1.1.2", and "Passenger get caught E1.1.3". The fault modes for these fault effects are respectively "Door does not open M1.1.1", "Opening time is long M1.1.2", and "Opening time is short M1.1.3." The above relations show relationships within the single part and are defined as fault effect nodes in Fig. 4.

Moreover, the fault causes related to the door P1 for each fault effect are respectively: "Door plate does not move C1.1.1 " for "Door doe not open M1.1.1", "Door open detection fault C1.1.2", "Door plate moves slowly C.1.3" for "Opening time is long M1.1.2", and "Door plate moves fast C1.1.4" for "Opening time is short M1.1.3." The above relations show relationships among different parts and are defined as fault cause nodes in Fig. 4.

With respect to the door rail P2 and the door plate P3 in Fig. 2 also, such relationships of the fault effect nodes and the fault cause nodes are similarly expressed in Fig. 4. Further, what is important is that the correlations between effects of the parts are shown here. For example, the fault cause nodes of the door P1 being "Passenger cannot get on and off train E1.1.1", "Service delay E1.1.2", and "Passenger get caught E1.1.3" are correlate to the fault effect nodes of the door rail P2 which is a lower rank part of the door P1 being "Door plate operation is obstructed E1.2.1, abnormal noise E1.3.1".

In Fig. 5, covering all the nodes, the nodes are described mainly in a graph format as follows. That is, nodes such as the part nodes, fault effect nodes showing relationships within the single part and fault cause nodes showing relationships among different parts are categorized. The nodes positioned on the fault cause side are regarded as source nodes and the nodes positioned on the cause effect side are regarded as destination nodes. Data described on an inter-node relation table arranged as in Fig. 5 are recorded in the fault knowledge database DB1 as part of the fault knowledge data D1.

With use of such fault knowledge, it becomes possible to provide guidance for fault examination. For example, in Fig. 4, in a case where a worker receives a report "Door open is very slow and service is delayed", by actually performing door examination from the nodes, "E1.1.2 Service delay" and "M1.1.2 Opening time is long", fault effect "C1.1.3 Door plate moves slowly, " "E1.2.1 Door operation is obstructed", and "M1.2.1 Resistance increase" are brought, and finally, when "C1.2.2 Loss of grease" can be confirmed, a process of adding grease to the door rail P2 can be performed. Fig. 6 shows a larger example of such fault knowledge data.

Thus, in the diagnosis with use of the fault knowledge, it becomes possible to perform the fault examination efficiently by grading fault candidates to be presented in a guidance for fault examination which is presented to the worker. For the purpose, similarity with the contents of failure which were reported in addition to occurrence rates of fault modes are calculated based on the past fault record and they are ranked accordingly. In addition, importance of the fault whose possibility is lost or raised can be changed by the similarity to the reported fault contents or the progress in the fault examination. In the present embodiment, an explanation will be given based on one of the example methods.

In the present invention, the score information which means the fault occurrence probability for every fault mode in the fault knowledge data D1 of Fig. 2 is provided so that starting guidance is made possible.

As for the way to proceed with the diagnosis using the fault knowledge, the following procedure is considered. That is, the worker uses the reported fault claim as a source, and follows the fault knowledge data D1 having correlations as shown in Fig. 6 downward while proceeding with the examination from what is supposed to correspond to the occurred situation. When reaching the lowest fault mode finally, the examination is completed.

It becomes possible to realize an efficient fault examination by creating a sequence that the worker follows at this time in the examination procedure creation unit 2 of Fig. 1. Fig. 7 shows an example of a flow of the examination procedure creation unit 2. Hereafter, an explanation will be given based on the flow.

In Fig. 7, first, in process step S21, the examination procedure creation unit 2 reads a fault claim 30. The fault claim 30 is a claim about an abnormal state of an asset from a worker of the asset, for example, and is given such as the one shown in Fig. 8. Here, in the fault claim, as information on a problem occurred in the text, there is a description such that the target equipment is a railway door A and, as contents of a report, "Door opening time is long at station and service delayed."

In examination start node decision process step S22, fault knowledge data D1 to be recorded in the fault knowledge database DB1 is referred to and, based on the contents of the fault claim 30, of the fault knowledge data D1, where to start the fault examination is determined. In this regard, based on the matching of the text contents in the claim 30 with words in the nodes of the fault knowledge data D1, from which node of the fault knowledge data shown in a graph format in Fig. 6 to start the examination. In the case of the text in Fig. 8, the words such as "Service delay" and "Door opening time is long" are similar to or the same as "Service delay E1.1.2" or "Opening time is long M1.1.2" in Fig. 4. Therefore, the nodes around here are to be selected as examination starting points.

In the presenting candidate ranking process step S23, ranking toward the lower nodes is conducted to support the worker who decides toward which lower node (in the above case, C1.1.2 and C1.1.3) the examination should be proceeded from the node being a current examination target (in the above case, M1.1.2).

For example, in presenting candidate ranking step S23, using the fault knowledge data D1 and a current examination result as sources, with respect to the fault mode node in the fault knowledge data D1, a possibility of the fault being occurring is estimated and an assurance degree is given. It is conceivable that, as a calculation method for the assurance degree, the score is corrected by considering a score given to each fault mode in Fig. 2, a connection relationship between the nodes in the fault knowledge data D1 shown in Fig. 6, and an examination state when the presenting candidate ranking process is performed. Accordingly, ranking is made from the higher assurance degree. Hereafter, its method will be shown.

As shown in Fig. 2, the score is given to the fault knowledge data D1 in the present embodiment. Moreover, weight W(i) is given to each node using the hierarchical order of the fault knowledge data D1. Here, i is an identifier of each node. An example of weight W(i) can be shown by Expression (1).

$$W(i) = A(i) x \ (\Sigma W(j)+S(i)) \qquad (1)$$

Here, J is a set of child nodes each having weight W(i), and j⊂J. This clause expresses the sum of weights of low rank nodes. In score S defined in Fig. 2, it is given when the node is a fault mode.

Moreover, A(i) is a coefficient set up using the candidate presentation screen of Fig. 9, in which each node is called from candidate presentation/input reception processing step S24 to be described later. For example, when "Nothing" is selected "0" is given, "Confirm" is selected "1" is given, and when selection is not made, "0.5" is given. In this way, the nodes whose fault possibility is already checked are not allowed to contribute to weights of the higher rank nodes. The meaning of a candidate presenting screen of Fig. 9 and coefficient setting will be described later.

By using weights calculated in this way, the weight can be given to each node. With use of the above, it becomes possible, by comparing weights of nodes to be examined currently, it becomes possible to give higher ranking according to the size of the weight W (i).

Next, in candidate presenting/input reception process step S24, in order to present a next examination location candidate to the worker, ranked presenting candidates are sent to the diagnosis HMI 5 and is displayed.

An example of the candidate presenting screen 90 is shown in Fig. 9. The candidate presenting screen 90 includes a screen area 91 which displays a current examination target and a screen location screen area 92 which displays a next examination location. In these areas, candidates selected by the worker in the previous step and examination location candidates are presented, respectively. When presenting those, examination locations are shown in accordance with the ranking made in the presenting candidates ranking process from the top. The worker can realize an efficient fault examination from the high order of the presentation candidate.

During the display in Fig. 9, in consideration of following the data of Fig. 6, as combinations of current nodes and lower rank nodes, there can be three patterns. Namely, a first combination of a current node being a fault effect and a lower node being a fault mode, a second combination of a current node being s fault mode and a lower rank node being a fault cause, and a third combination of a current node being a fault cause and a lower rank node being a fault effect. In either case, in a screen area 91 on the left side in Fig. 9, nodes chosen up to the previous steps are shown. Also, in a screen area 92 on the right side, lower rank nodes corresponding to the examination locations are shown.

In the screen area 91 on the left side in Fig. 9, a current examination target display frame 912 and a return button 911 are formed. Further, in the current examination target display frame 912, pairs of part names and fault contents or fault situations are displayed. In addition, when the return button 911 is operated, the screen area 91 and the screen area 92 are replaced with the previous ones showing contents of the upper stream side, respectively.

In the right side screen area 92 of Fig. 9, an examination location display frame 921 is formed. The number of displays is changed and shown according to that occasional situation. In the display example of Fig. 9, as clearly seen by referring to Figs. 4 and 6, the phenomenon C1.1.3 in which "Door plate of the door moves slowly" is shown. In this regard, on the downstream fault cause side, abnormality of the door rail, abnormality of the door plate, and abnormality of the actuator are assumed. Therefore, in the examination location display frame 921, three pairs corresponding respectively are shown. In the examination location display frame 921 of each group, a pair of a part name 922 and a fault content or a fault status 923 is shown, and each of which is provided with Confirm button 925 and Nothing button 924.

Here, the examination is supported by relating every node with each part and displaying it. Accordingly, as a candidate for an examination location to be shown in the examination location display frame 921, the display 923 being one of the part name display 922 and the fault effect/fault mode/fault cause corresponding to different node types is shown. Hereafter, the three kinds of displays 923 of the fault effect/fault mode/fault cause will be called confirmation phenomena.

Moreover, when the worker has examined the examination location and confirmed that it has actually occurred, the examination location is selected by pushing the confirmation button 925 to proceed with the examination. In addition, when each displayed alternative is considered not to be suitable, it is carrying out the depression of the returning button 911 which is shown in the screen area 91, and it is also possible to return and redo diagnosis in the stage which performed check processing of the last investigation place. Moreover, when a problem shown at the examination location has not actually occurred, nothing button 924 is pressed, recording that nothing has occurred.

In the coefficient A(i) in Expression (1) previously described, the above judgment of the worker is reflected. For example, when the problem shown at the examination location in the screen area 92 has not actually occurred, pressing Nothing button 924 results in coefficient A(i) set to A(i) = 0 and W(i) = 0 in Expression (1). Accordingly, as for this item whose soundness has been checked, the possibility of future examination is denied.

When the worker checks the examination location and confirms that the fault has actually occurred, A(i)=1 is set by pressing Confirm button 925 and the following Expression (1) is obtained.

$$W(i) = (\Sigma W(j)+S(i))$$

Thus, possibility of the examination of this item is highly evaluated.

When the worker does not select the examination location and does not press either Confirm button 925 or the Nothing button 924, A(i) = 0.5 is set and the following Expression (1) is obtained.

$$W(i) = (\Sigma W(j)+S(i))/2$$

The above implies that there is a possibility of examination in the future.

In addition, needless to say, it is preferable to be a state reflecting that, on the screen of the diagnosis HMI5, the above judgment results are, for example, categorized by color and displayed with respect to the node concerned, or deleted from the display so that the structural connection relationship as in Fig. 6 is gradually simplified by the progress of the examination and reflection of the examination result, or narrowed down toward the core matter. It can be said that the examination procedure creation unit 2 presents a next examination location including the starting display.

When the confirmation button 925 is pressed, in the flow of the examination procedure creation unit 2 of Fig. 7, the processing is returned to the candidate presenting/input reception process step S24 from the diagnostic HMI 5.

Next, in presenting candidate update process step S25, according to the confirm phenomenon when Confirm process is pressed by pressing Confirm button 925 in the previous step, processing to confirm whether a next examination location candidate is presented or the examination is terminated is performed. In the present invention, the examination is terminated by selecting the fault mode occurring finally. Therefore, when the confirm phenomenon is a fault effect or a fault cause, the examination advances to the next stage. Accordingly, in the fault knowledge shown in Fig. 6, by allowing a lower node list corresponding to the confirm phenomenon selected by pressing Confirm button 925 to be a next examination location, it becomes possible to proceed with more detailed examination while following the fault knowledge toward the lower rank nodes. In this case, with a new examination location as a target, the process is returned to the presenting candidate ranking process step S23.

When the confirm phenomenon is a fault mode, the worker selects whether to terminate the examination at this stage or to continue the examination to proceed to a finer examination of the fault mode.

Fig. 10 shows an example of a display the fault location confirming screen 93 selected by the worker. Here, an example is shown in which a new fault location check screen 93 is displayed in a manner of being overwritten in an area currently formed in screen areas 91 and 92 of Fig. 9. In this example, a message "Is fault location confirmed as below?" is attached, and a part 931 which is a candidate for decision and a fault content 932 are displayed, and also Confirm process step S button 933 and Continue button 934 for inputting a judgment result are displayed. When "Continue" is selected here, as in various kinds of check phenomena, diagnosis is continued for the node of the low rank of fault mode as a next examination location.

On the other hand, when Confirm is selected, the process advances to the diagnosis validity judgment process step S27 to judge validity of terminating the diagnosis. Here, the diagnosis validity judgment unit 3 is activated, and it is judged whether or not the diagnosis should be terminated or continued to examine another examination location. The processing of the diagnosis validity judgment unit 3 will be described later.

When the judgment result returned from the diagnosis validity judgment unit 3 is "Termination permitted", the process advances to record process step S28, the selected fault mode is recorded in the fault examination result database DB2, and the examination is terminated.

When the returned result from the diagnosis validity judgment unit 3 indicates to examine another examination location, a next examination location candidate is presented through the diagnosis HMI 5 to the worker.

Fig. 11 shows an example of a check required location display screen 94. In this example, the check required location display screen 94 adds a message "check is recommended about the following item", and displays a subject which is a candidate for the check required location in a check required location candidate display frame 941. The check required location candidate display frame 941 shows a proper number of items. In the check required location candidate display frame 941, a part 943 and a fault content 944 are displayed and, also, Confirm conduct button 935 for inputting a judgment result is displayed. Moreover, in the check required location candidate display frame 941, as a reason to recommend checking of the location concerned, high, medium, or low grade of necessity is displayed.

Accordingly, here, examination locations presented by the diagnosis validity judgment unit 3 is looked through, the display part is confirmed with the worker to check whether or not other fault possibilities remain, and completion of the examination is urged. At this time, by arranging in order of the examination necessity which the diagnosis validity judging unit 3 to be described later presents and displaying it, a worker is urged to select from the one being a higher order and examination efficiency is raised. Moreover, by presenting necessity of confirmation to the worker, whether to perform additional examination or to complete the examination with the selected fault mode can be judged. In Fig. 11, an example indicating necessity by high, medium, and low is shown. This examination necessity information is also obtained from the diagnosis validity judgment unit.

When the worker examines another location, the worker presses a check conducting button 945 of a selected examination location. Thereby, in additional examination execution judgment process step S27 of an examination procedure creation unit flow of Fig. 7, it is judged as additional examination execution. With the selected examination location as a next examination candidate, the process returns to presenting candidate ranking process step S23, and detailed examination is continued. When the worker selects termination of the examination, additional examination instruction is not given, the selected fault mode is recorded in the fault examination result database DB2, and the examination is ended.

Next, processing of the diagnosis validity judgment unit 3 will be explained. When the worker decides to complete the fault examination, a wrong fault examination of worker due to an insufficient examination is prevented by detecting whether or not, in spite of the possibility of fault occurrence other than the fault selected by the worker, there remain ones which are not examined and, when there are some, by returning them with the examination necessity.

Here, there is shown a method of using weight W generated in presenting candidate ranking process step S23. Fig. 12 shows a process flow of the diagnosis validity judgment unit 3. In this series of processing, first, in examination state reading process step S31, a set of weight of current all nodes is obtained from the examination procedure creation unit 2 and the fault knowledge data D1 is obtained from the fault knowledge database DB1.

Next, between process step S32 and process step S37, repetition processing which changes the unexamined node i into variable is performed. This is a case where, in order to check how weight W changes, about unexamined nodes not being processed about confirmed or not confirmed, in order to check how weight W changes, when one of them is confirmed, unexamined nodes are sequentially processed. The loop processed sequentially is regarded as a high order loop.

Also, in the above higher ranked loops, between process step S33 and process Step S36, there is processing of lower ranked loops which is repetitive processing where A(i), change pattern j, and unexamined node i of Expression (1) are variably changed. Within the lower loops, in process step S33, regarding a pattern as j where coefficient A(i) of the W(i) calculation formula is changed from a value of the coefficient A(i) at the current examination result, looping with A (i, j) is conducted. Being based on it, in process step S34, W' (h, i, j) h $\subset$ H , H calculates total node set. In this regard, in the calculation formula of W, with respect to node h, W' (h) is made by changing A(h) to j.

Next, in weight ranking change calculation process step S35, how much the weight W all over the fault knowledge data varies when the coefficient A is changed is expressed by Equation (2) with C for variation amount in the weight ranking.

$$C(i, j) = \Sigma \ (RANK(W'(i, j, h)) - RANK(W(h))^2 \quad (2)$$

Here, RANK (W) is for calculating the ranking of the size of W in all the nodes. This weight ranking change calculation processing is performed with respect to all of the unexamined nodes i and A's change patterns j.

Next, in examination major effect node detection process step S38, the variation C (i,j) in the ranking of the calculated ranking variation C greater than the threshold value T is extracted.

Here, as for the unexamined node i having the variation C (i,j) of the weight ranking whose extracted change in ranking is large, the coefficient A is changed by the fault examination of the worker and the node to be examined sharply varies. Therefore, checking it is judged to be important.

On the other hand, regardless of the examination, the node with a small ranking change can be judged that the effect of conducting the examination is small because the change in the examination status is small. Accordingly, by extracting a node whose variation C in weight ranking is large and presenting it to the worker, it becomes possible to urge checking the node which is unexamined but greatly influential to the result and to improve reliability of the examination result.

In examination required node presenting process step S39, a set of unexamined nodes i whose extracted variation C in weight ranking is large is notified to the examination creation unit 2. At this time, it is possible to add examination necessity information according to the size of variation C in weight ranking. In this regard, the variation C in weight ranking is graded as high, medium, and low based on an appropriate threshold, and its information is added. Moreover, in order to give priority to the greater variation C in weight ranking, ranking is made according to the size of the variation C in weight ranking, and its information is also given.

In the present embodiment, the method is shown in which the diagnosis is proceeded while updating the coefficient A(i) by judging existence or nonexistence of occurrence status of each node through the examination of the worker. However, in the case where the diagnosis database DB3 is already held and the diagnosis data D3 of an asset of other specification is available, it is possible to judge the occurrence status of each node with use of the diagnosis data.

In this regard, for example, for each fault mode, a judgment formula corresponding to sensor data is set. It can be such that when the judgment result is true, the coefficient A(i)=1 and a false, the coefficient A(i)=0.
Alternatively, when the judgment result of occurrence is obtained, not in a true/false manner but in probability, sequential probability values may be put in the coefficient A(i).

In particular, when the coefficient A(i) is not confirmed as 0 or 1 but sequential probability values are contained, it is necessary to perform confirmation finally for the worker to check existence or nonexistence of occurrence. As the same processing of the unexamined node described above, they are subjected to loop processing step S32 in the unexamined nodes, and the loop processing step S33 in a changed pattern of the coefficient A(i) of the diagnosis validity judging unit.

In this regard, as described above, the coefficient A(i) is changed by 0, 0.5, 1, etc. Therefore, when there is unconfirmed items in sensor data or measurement results by a worker on which the coefficient A(i) is calculated, it is possible to consider , when the pattern is changed, how the coefficient A(i) changes and, as a result, how the changed weight W' (i, j) and, finally, and the variation C of weight ranking varies. At this time, in change pattern loop process step S33 of coefficient A(i), the value of coefficient A(i) itself is not changed. Actually, by carrying out a loop with use of sensor data related to the calculation of the coefficient A(i) and a variation pattern of the measurement result related to calculation of coefficient A(i), it becomes possible to cover all patterns which may exist and prevent omission in checking by the sensor and the fault examination.

In this case, in examination required node presenting process step S339, not only the examination required node, its examination necessity, and ranking but also extracted sensor or measurement having greater effects are notified at the same time to the examination procedure creation unit, and presented to the worker from the examination procedure creation unit. Thus, not only the check required node is simply shown but also information of more specific sensor/measurement to be checked is shown to the worker, making it possible to prevent omission in the fault examination efficiently.

Fig. 13 shows an example of a screen of check required location presentation in this case. On a screen 94 of Fig. 13, check require location information 946 for recommending further measurement is shown in the check required location candidate display frame 941 of Fig. 11.

According to the above embodiment, the fault finding support system as follows is realized. That is, the fault finding support system includes: fault knowledge data holding knowledge such as faults of target asset; a work instruction unit for instructing a fault finding procedure to a worker; and a diagnosis completion judgment unit for checking whether or not an important matter exists among unexamined items, in which the system presents a work instruction to prevent a misdiagnosis due to an imperfect examination by instructing a highly efficient examination procedure based on the fault knowledge data and, at the same time, verifying that important item to be checked does not remain in unexamined items based on the diagnosis result being not variable when the examination result is entered the unchecked items.

List of Reference Signs

| | |
|---|---|
| 1 | Fault finding support system |
| 2 | Examination procedure creation unit |
| 3 | Diagnosis validity judgment unit |
| 5 | Diagnosis HMI |
| 4 | Target asset |
| DB1 | Fault knowledge database |
| DB2 | Fault examination result database |
| DB3 | Monitoring diagnosis database |

## Claims

1. A fault finding support system (1) configured to present an examination procedure for a target asset (4) when an abnormality of the target asset (4) occurs, and further configured to find a fault location of the target asset (4) and support a diagnosis by obtaining both an examination result and a judgement result from a worker, the fault finding support system (1) comprising:

    a fault knowledge database (DB1) which holds, for each of the parts forming the target asset (4), a fault score showing a fault and its fault occurrence probability together with nodes on an effect side and cause side of the fault as fault knowledge data;
an examination procedure creation unit (2) configured to present the examination procedure to the worker with use of the fault knowledge data;
a diagnosis HMI (5) configured to present information to the worker and obtain an input from the worker; and
a diagnosis validity judgement unit (3) configured to judge validity of the diagnosis,
wherein the examination procedure creation unit (2) is configured to present nodes on the effect side and the cause side of the fault to the worker and, based on an examination result of the worker, give weight to the fault scores, and
wherein, when the worker instructs the termination of the examination, the diagnosis validity judgement unit (3) is configured to select, from among unexamined nodes, nodes on which the examination should be continued based on a change in a weight ranking when a weight coefficient for each respective unexamined node is changed, and present them to the worker.

**2.** The fault finding support system (1) according to claim 1,
wherein the examination result of the worker to be reflected in the weight giving is judgement about existence/nonexistence of abnormality in the node on the cause side and non-necessity of the examination.

**3.** The fault finding support system (1) according to claim 2,
wherein the diagnosis validity judgement unit (3) is configured to change the weight coefficient set for each respective unexamined node from a value corresponding to no input from the worker to a value corresponding to confirmation of the existence of an abnormality.

**4.** The fault finding support system (1) according to claim 1,
wherein the diagnosis validity judgement unit (3) is configured to present a set of unexamined nodes for which the change in weight ranking is large.

**5.** The fault finding support system (1) according to claim 1 or claim 4,
wherein the diagnosis validity judgement unit (3) is configured to present a set of unexamined nodes ranked by the size of the change in weight ranking.

**6.** The fault finding support system (1) according to claim 1 or claim 4,
wherein the examination procedure creation unit (2) is configured, based on sensor data and measurement data of the target asset (4), to give weight to the fault scores, and the diagnosis validity judgement unit (3) is configured to select, from among nodes with unconfirmed data, nodes on which the examination should be continued based on a change in the weight ranking when a weight coefficient for each respective node with unconfirmed data is changed, and present them to the worker.

## Patentansprüche

**1.** Fehlerermittlungsunterstützungssystem (1), das dazu ausgelegt ist, ein Untersuchungsverfahren für eine Zieleinrichtung (4) zu präsentieren, wenn eine Anomalie der Zieleinrichtung (4) auftritt, und ferner dazu ausgelegt ist, eine Fehlerstelle der Zieleinrichtung (4) zu finden und eine Diagnose zu unterstützen, indem es sowohl ein Untersuchungsergebnis als auch ein Beurteilungsergebnis eines Arbeiters erhält, wobei das Fehlerermittlungsunterstützungssystem (1) Folgendes umfasst:

eine Fehlerkenntnisdatenbank (DB1), die für jeden der Teile, welche die Zieleinrichtung (4) bilden, eine Fehlerpunktzahl enthält, welche einen Fehler und dessen Fehlereintrittswahrscheinlichkeit zusammen mit Knoten auf einer Wirkungsseite und einer Ursachenseite des Fehlers als Fehlerkenntnisdaten zeigt;
eine Untersuchungsverfahrenerzeugungseinheit (2), die dazu ausgelegt ist, dem Arbeiter das Untersuchungsverfahren unter Verwendung der Fehlerkenntnisdaten zu präsentieren;
eine Diagnose-HMI (5), die dazu ausgelegt ist, dem Arbeiter Informationen zu präsentieren und eine Eingabe von dem Arbeiter zu erhalten; und
eine Diagnosegültigkeitsbeurteilungseinheit (3), die dazu ausgelegt ist, die Gültigkeit der Diagnose zu beurteilen,
wobei die Untersuchungsverfahrenerzeugungseinheit (2) dazu ausgelegt ist, dem Arbeiter Knoten auf der Wirkungsseite und der Ursachenseite des Fehlers zu präsentieren und, beruhend auf einem Untersuchungsergebnis des Arbeiters, den Fehlerpunktzahlen eine Gewichtung zu verleihen, und
wobei, wenn der Arbeiter die Beendigung der Untersuchung veranlasst, die Diagnosegültigkeitsbeurteilungseinheit (3) dazu ausgelegt ist, aus nicht untersuchten Knoten Knoten auszuwählen, an denen die Untersuchung fortgeführt werden sollte, basierend auf einer Änderung einer Gewichtungsreihung, wenn ein Gewichtungskoeffizient für jeden entsprechenden nicht untersuchten Knoten geändert wird, und sie dem Arbeiter zu präsentieren.

**2.** Fehlerermittlungsunterstützungssystem (1) nach Anspruch 1,
wobei das Untersuchungsergebnis des Arbeiters, das in der Gewichtungsverleihung wiederzugeben ist, eine Beurteilung über das Vorliegen/Nichtvorliegen einer Anomalie in dem Knoten auf der Ursachenseite und eine Nicht-Notwendigkeit der Untersuchung ist.

**3.** Fehlerermittlungsunterstützungssystem (1) nach Anspruch 2,
wobei die Diagnosegültigkeitsbeurteilungseinheit (3) dazu ausgelegt ist, den Gewichtungskoeffizienten, der für jeden entsprechenden nicht untersuchten Knoten eingestellt ist, von einem Wert, der keiner Eingabe von dem Arbeiter entspricht, auf einen Wert, der einer Bestätigung des Vorliegens einer Anomalie entspricht, zu ändern.

**4.** Fehlerermittlungsunterstützungssystem (1) nach Anspruch 1,
wobei die Diagnosegültigkeitsbeurteilungseinheit (3) dazu ausgelegt ist, einen Satz von nicht untersuchten Knoten zu präsentieren, für welchen die Änderung der Gewichtungsreihung groß ist.

**5.** Fehlerermittlungsunterstützungssystem (1) nach Anspruch 1 oder 4,
wobei die Diagnosegültigkeitsbeurteilungseinheit (3) dazu ausgelegt ist, einen Satz von nicht untersuchten Knoten zu präsentieren, welche nach der Größe der Änderung der Gewichtungsreihung gereiht sind.

**6.** Fehlerermittlungsunterstützungssystem (1) nach Anspruch 1 oder 4,
wobei die Untersuchungsverfahrenerzeugungseinheit (2) dazu ausgelegt ist, basierend auf Sensordaten und Messdaten der Zieleinrichtung (4) den Fehlerpunktzahlen eine Gewichtung zu verleihen, und wobei die Diagnosegültigkeitsbeurteilungseinheit (3) dazu ausgelegt ist, aus Knoten mit nicht bestätigten Daten Knoten auszuwählen, an denen die Untersuchung fortgeführt werden sollte, basierend auf einer Änderung der Gewichtungsreihung, wenn ein Gewichtungskoeffizient für jeden entsprechenden Knoten mit nicht bestätigten Daten geändert wird, und sie dem Arbeiter zu präsentieren.

## Revendications

**1.** Système d'aide à la découverte de défaillance (1) configuré pour présenter une procédure d'examen pour un actif cible (4) lorsqu'une anomalie de l'actif cible (4) survient, et configuré en outre pour découvrir un emplacement de défaillance de l'actif cible (4) et aider à un diagnostic en obtenant à la fois un résultat d'examen et un résultat de jugement d'un travailleur, le système d'aide à la découverte de réseau (1) comprenant :

une base de données de connaissance de défaillance (DB1) qui contient, pour chacune des parties formant l'actif cible (4), un score de défaillance montrant une défaillance et sa probabilité d'occurrence de défaillance ainsi que des nœuds d'un côté effet et d'un côté cause de la défaillance en tant que données de connaissance de défaillance ;
une unité de création de procédure d'examen (2) configurée pour présenter la procédure d'examen au travailleur en utilisant les données de connaissance de défaillance ;
une IHM de diagnostic (5) configurée pour présenter des informations au travailleur et obtenir une entrée du travailleur ; et
une unité de jugement de validité de diagnostic (3) configurée pour juger de la validité du diagnostic,
dans lequel l'unité de création de procédure d'examen (2) est configurée pour présenter des nœuds du côté effet et du côté cause de la défaillance au travailleur et, sur la base d'un résultat d'examen du travailleur, donner du poids aux scores de défaillance, et
dans lequel, lorsque le travailleur ordonne la fin de l'examen, l'unité de jugement de validité de diagnostic (3) est configurée pour sélectionner, parmi des nœuds non examinés, des nœuds sur lesquels l'examen doit être poursuivi sur la base d'un changement dans un classement de poids lorsqu'un coefficient de poids pour chaque nœud non examiné respectif est modifié, et les présenter au travailleur.

**2.** Système d'aide à la découverte de défaillance (1) selon la revendication 1,
dans lequel le résultat d'examen du travailleur à refléter dans le poids donné est un jugement sur l'existence/la non-existence d’une anomalie dans le nœud du côté de la cause et de la non-nécessité de l’examen.

**3.** Système d’aide à la découverte de défaillance (1) selon la revendication 2, dans lequel l’unité de jugement de validité de diagnostic (3) est configurée pour changer le coefficient de poids défini pour chaque nœud non examiné respectif d’une valeur correspondant à aucune entrée du travailleur à une valeur correspondant à la confirmation de l’existence d’une anomalie.

**4.** Système d’aide à la découverte de défaillance (1) selon la revendication 1, dans lequel l’unité de jugement de validité de diagnostic (3) est configurée pour présenter un ensemble de nœuds non examinés pour lesquels le changement de classement de poids est important.

**5.** Système d’aide à la découverte de défaut (1) selon la revendication 1 ou la revendication 4, dans lequel l’unité de jugement de validité de diagnostic (3) est configurée pour présenter un ensemble de nœuds non examinés classés par la taille du changement de classement de poids.

**6.** Système d’aide à la découverte de défaillance (1) selon la revendication 1 ou la revendication 4, dans lequel l’unité de création de procédure d’examen (2) est configurée, sur la base des données de capteur et des données de mesure de l’actif cible (4), pour donner un poids aux scores de défaillance, et l’unité de jugement de validité de diagnostic (3) est configurée pour sélectionner, parmi des nœuds avec des données non confirmées, des nœuds sur lesquels l’examen doit être poursuivi sur la base d’un changement dans le classement de poids lorsqu’un coefficient de poids pour chaque nœud respectif avec des données non confirmées est changé, et les présenter au travailleur.

FIG. 1

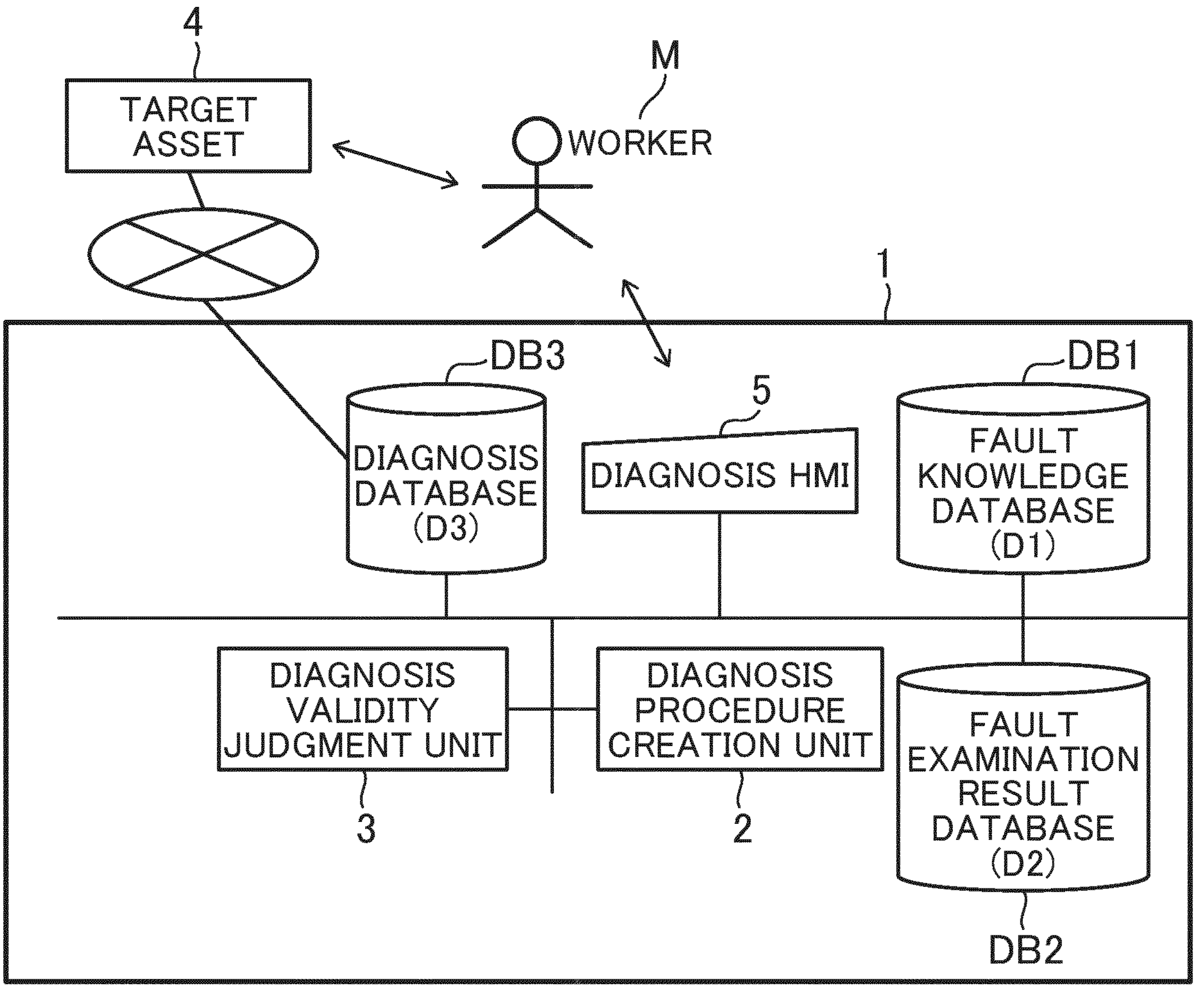
4
TARGET ASSET
M
WORKER
1
DB3
DIAGNOSIS DATABASE (D3)
5
DIAGNOSIS HMI
DB1
FAULT KNOWLEDGE DATABASE (D1)
DIAGNOSIS VALIDITY JUDGMENT UNIT
3
DIAGNOSIS PROCEDURE CREATION UNIT
2
FAULT EXAMINATION RESULT DATABASE (D2)
DB2

# FIG. 2

DB1(D1)

D11 D12 D13 D14 D15

| No. | PART ID | PART | FAULT MODE ID | FAULT MODE | SCORE | FAULT EFFECT ID | EFFECT DESCRIPTION | SAFTY EFFECT | PRACTICAL EFFECT | FAULT CAUSE ID | FAULT CAUSE |
|---|---|---|---|---|---|---|---|---|---|---|---|
| | | | FAULT MODE | | | FAULT EFFECT | | | | FAULT CAUSE | |
| 1 | P1 | DOOR | M1.1.1 | DOOR PLATE DOES NOT OPEN | 60 | E1.1.1 | PASSENGER CANNOT GET ON AND OFF | LOW | HIGH | C1.1.1 | DOOR PLATE DOES NOT MOVE |
| 2 | | | M1.1.2 | OPENING TIME IS LONG | 79 | E1.1.2 | SERVICE DELAY | LOW | MEDIUM | C1.1.2 | DOOR OPEN DETECTION FAULT |
| 3 | | | | | | | | LOW | MEDIUM | C1.1.3 | DOOR PLATE MOVES SLOWLY |
| 4 | | | M1.1.3 | OPENING TIME IS SHORT | 40 | E1.1.3 | PASSENGER GET CAUGHT | HIGH | MEDIUM | C1.1.4 | DOOR PLATE MOVES FAST |
| 5 | P2 | DOOR RAIL | M1.2.1 | RESISTANCE INCREASE | 26 | E1.2.1 | MOVEMENT OF DOOR PLATE OBSTRUCTED, ABNORMAL SOUND | LOW | MEDIUM | C1.2.1 | ABNORMALITY ENTERED |
| 6 | | | | | | | | LOW | MEDIUM | C1.2.2 | LOSS OF GREASE |
| 7 | P3 | DOOR PLATE | M1.3.1 | RESISTANCE INCREASE | 14 | E1.3.1 | MOVEMENT OF DOOR PLATE OBSTRUCTED, ABNORMAL SOUND | MEDIUM | MEDIUM | C1.3.1 | DOOR PLATE DEFORMED |
| 8 | P4 | ACTUATOR | M2.4.1 | OPERATIONAL POWER TOO SMALL | 30 | E2.4.1 | MOVEMENT IS SLOW | LOW | MEDIUM | C2.4.1 | RESISTANCE INCREASE |
| 9 | | | | | | | | LOW | MEDIUM | C2.4.2 | AIRFLOW AMOUNT TOO SMALL |
| 10 | | | M2.4.2 | OPERATIONAL POWER TOO STRONG | 40 | E2.4.2 | MOVEMENT IS FAST | HIGH | LOW | C2.4.3 | AIRFLOW AMOUNT TOO MUCH |
| 11 | P5 | PISTON | M2.5.1 | RESISTANCE INCREASE | 8 | E2.5.1 | MOVEMENT OBSTRUCTED, ABNORMAL SOUND | LOW | MEDIUM | C2.5.1 | LOSS OF GREASE |
| 12 | P6 | CYLINDER | M2.6.1 | ALIGNMENT ABNORMAL | 30 | E2.6.1 | MOVEMENT OBSTRUCTED, STOPS IN THE WAY, ABNORMAL SOUND | MEDIUM | LOW | C2.6.1 | LOOSE FASTENING |
| 13 | P7 | AIR PIPE | M2.7.1 | AIR LEAK | 40 | E2.6.7 | AIR SUPPLY DECREASE, LEAK SOUND | LOW | HIGH | C2.7.1 | CRACK |
| 14 | P8 | REGULATING VALVE | M3.8.1 | AIRFLOW PATH TOO SMALL | 20 | E3.8.1 | AIRFLOW AMOUNT DECREASE | LOW | MEDIUM | C3.8.1 | ERROR IN VALVE SETTING (CLOSE) |
| 15 | | | M3.8.2 | AIRFLOW PATH TOO LARGE | 8 | E3.8.2 | AIRFLOW AMOUNT INCREASE | MEDIUM | MEDIUM | C3.8.2 | ERROR IN VALVE SETTING (OPEN) |
| 16 | | | M3.8.3 | UNABLE TO SET FLOW AMOUNT | 3 | E3.8.3 | AIRFLOW UNSTABLE | MEDIUM | MEDIUM | C3.8.3 | LOOSE ADJUSTMENT |
| 17 | | | M3.8.4 | AIRFLOW PATH CLOSED | 10 | E4.9.3 | AIR DOES NOT FLOW | LOW | MEDIUM | C4.9.4 | ABNORMALITY CLOGGED |
| 18 | | | M3.8.5 | AIR LEAK | 15 | E4.9.4 | AIRFLOW AMOUNT DECREASE, LEAK SOUND | LOW | MEDIUM | C4.9.5 | GASKET DAMAGED |
| ⋮ | | | | | | | | | | | |

FIG. 3

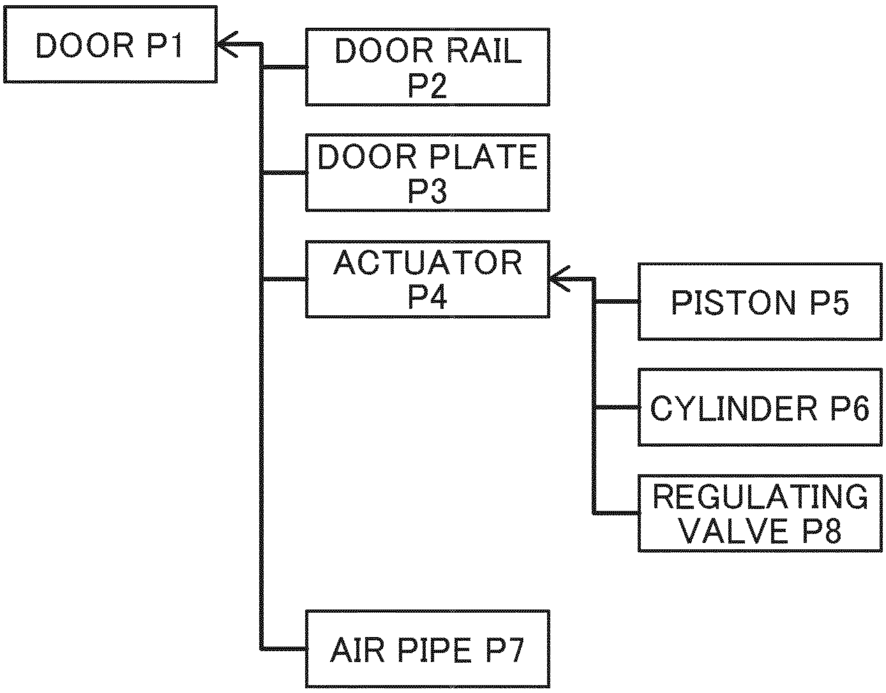
DOOR P1
DOOR RAIL P2
DOOR PLATE P3
ACTUATOR P4
PISTON P5
CYLINDER P6
REGULATING VALVE P8
AIR PIPE P7

FIG. 4

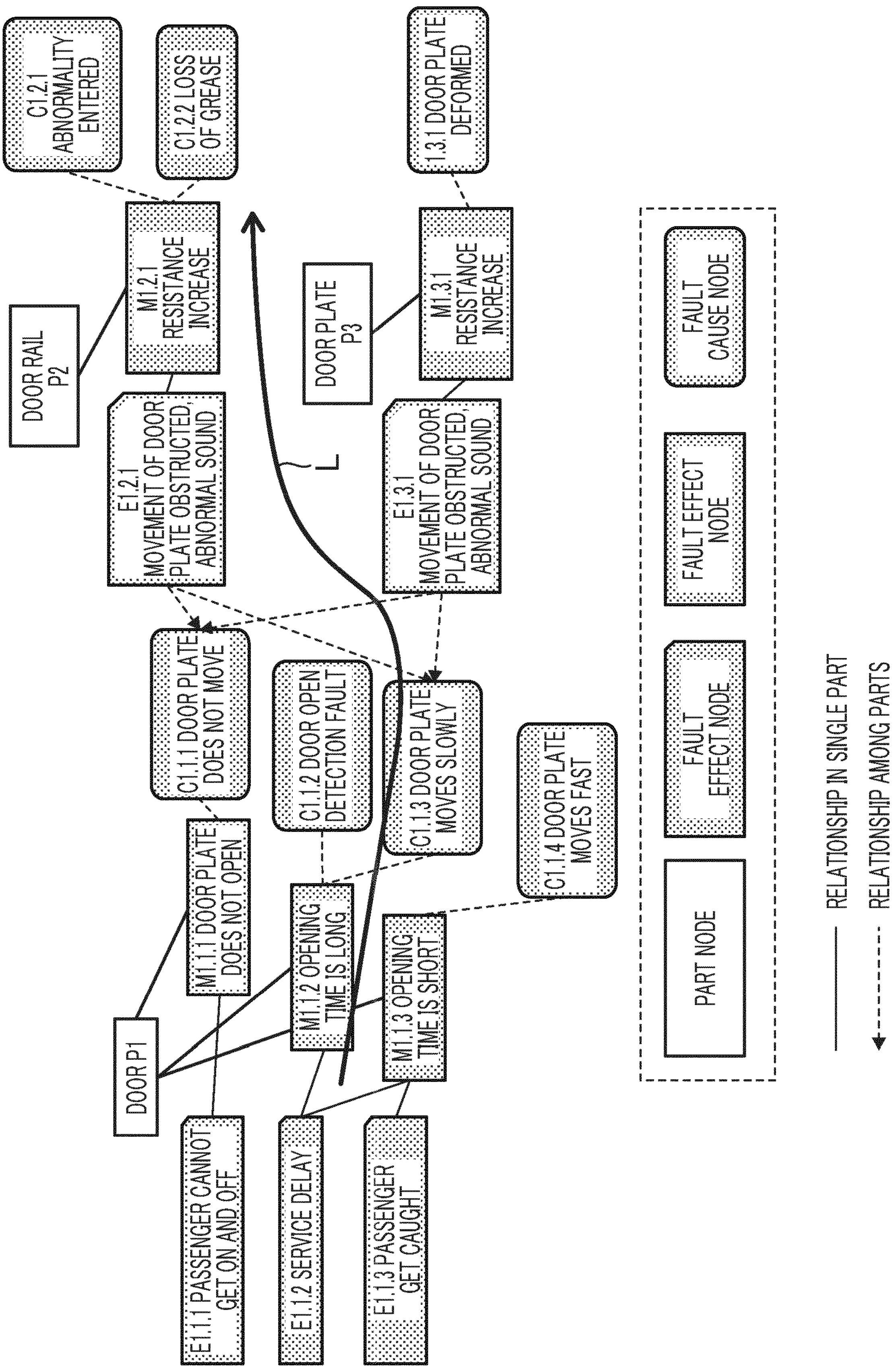
C1.2.1 ABNORMALITY ENTERED
C1.2.2 LOSS OF GREASE
1.3.1 DOOR PLATE DEFORMED
DOOR RAIL P2
M1.2.1 RESISTANCE INCREASE
DOOR PLATE P3
M1.3.1 RESISTANCE INCREASE
E1.2.1 MOVEMENT OF DOOR PLATE OBSTRUCTED, ABNORMAL SOUND
L
E1.3.1 MOVEMENT OF DOOR PLATE OBSTRUCTED, ABNORMAL SOUND
C1.1.1 DOOR PLATE DOES NOT MOVE
C1.1.2 DOOR OPEN DETECTION FAULT
C1.1.3 DOOR PLATE MOVES SLOWLY
C1.1.4 DOOR PLATE MOVES FAST
M1.1.1 DOOR PLATE DOES NOT OPEN
M1.1.2 OPENING TIME IS LONG
M1.1.3 OPENING TIME IS SHORT
DOOR P1
E1.1.1 PASSENGER CANNOT GET ON AND OFF
E1.1.2 SERVICE DELAY
E1.1.3 PASSENGER GET CAUGHT
FAULT CAUSE NODE
FAULT EFFECT NODE
FAULT EFFECT NODE
PART NODE
RELATIONSHIP IN SINGLE PART
RELATIONSHIP AMONG PARTS

FIG. 5

| SOURCE NODE | DESTINATION NODE |
|---|---|
| M1.1.1 | P1 |
| M1.1.2 | P1 |
| M1.1.3 | P1 |
| M1.1.1 | E1.1.1 |
| C1.1.1 | M1.1.1 |
| M1.1.2 | E1.1.2 |
| M1.1.3 | E1.1.2 |
| M1.1.3 | E1.1.3 |
| C1.1.2 | M1.1.2 |
| C1.1.3 | M1.1.2 |
| C1.1.4 | M1.1.3 |
| E1.2.1 | C1.1.1 |
| E1.2.1 | C1.1.3 |
| E1.3.1 | C1.1.1 |
| E1.3.1 | C1.1.3 |
| ... | ... |

FIG. 6

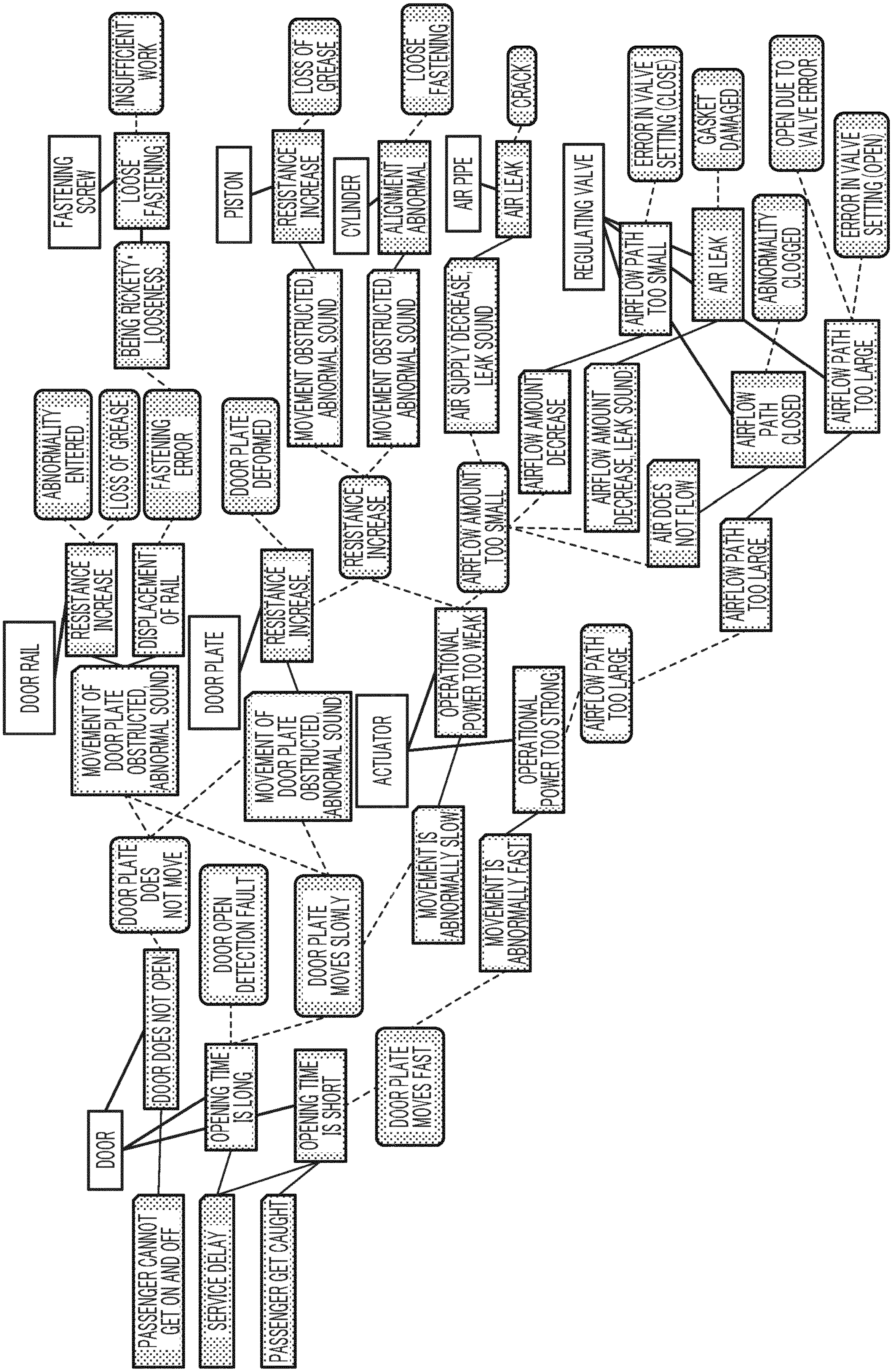
DOOR RAIL
RESISTANCE INCREASE
DISPLACEMENT OF RAIL
ABNORMALITY ENTERED
LOSS OF GREASE
FASTENING ERROR
BEING RICKETY·LOOSENESS
FASTENING SCREW
LOOSE FASTENING
INSUFFICIENT WORK
MOVEMENT OF DOOR PLATE OBSTRUCTED, ABNORMAL SOUND
DOOR PLATE
RESISTANCE INCREASE
DOOR PLATE DEFORMED
RESISTANCE INCREASE
MOVEMENT OBSTRUCTED, ABNORMAL SOUND
MOVEMENT OBSTRUCTED, ABNORMAL SOUND
PISTON
RESISTANCE INCREASE
LOSS OF GREASE
CYLINDER
ALIGNMENT ABNORMAL
LOOSE FASTENING
AIR SUPPLY DECREASE, LEAK SOUND
AIR PIPE
AIR LEAK
CRACK
MOVEMENT OF DOOR PLATE OBSTRUCTED, ABNORMAL SOUND
ACTUATOR
OPERATIONAL POWER TOO WEAK
OPERATIONAL POWER TOO STRONG
AIRFLOW AMOUNT TOO SMALL
AIRFLOW AMOUNT DECREASE
AIRFLOW AMOUNT DECREASE, LEAK SOUND
AIR DOES NOT FLOW
AIRFLOW PATH TOO LARGE
AIRFLOW PATH TOO LARGE
REGULATING VALVE
AIRFLOW PATH TOO SMALL
ERROR IN VALVE SETTING (CLOSE)
AIR LEAK
GASKET DAMAGED
ABNORMALITY CLOGGED
AIRFLOW PATH CLOSED
AIRFLOW PATH TOO LARGE
OPEN DUE TO VALVE ERROR
ERROR IN VALVE SETTING (OPEN)
DOOR PLATE DOES NOT MOVE
DOOR OPEN DETECTION FAULT
DOOR PLATE MOVES SLOWLY
MOVEMENT IS ABNORMALLY SLOW
MOVEMENT IS ABNORMALLY FAST
DOOR
DOOR DOES NOT OPEN
OPENING TIME IS LONG
OPENING TIME IS SHORT
DOOR PLATE MOVES FAST
PASSENGER CANNOT GET ON AND OFF
SERVICE DELAY
PASSENGER GET CAUGHT

FIG. 7

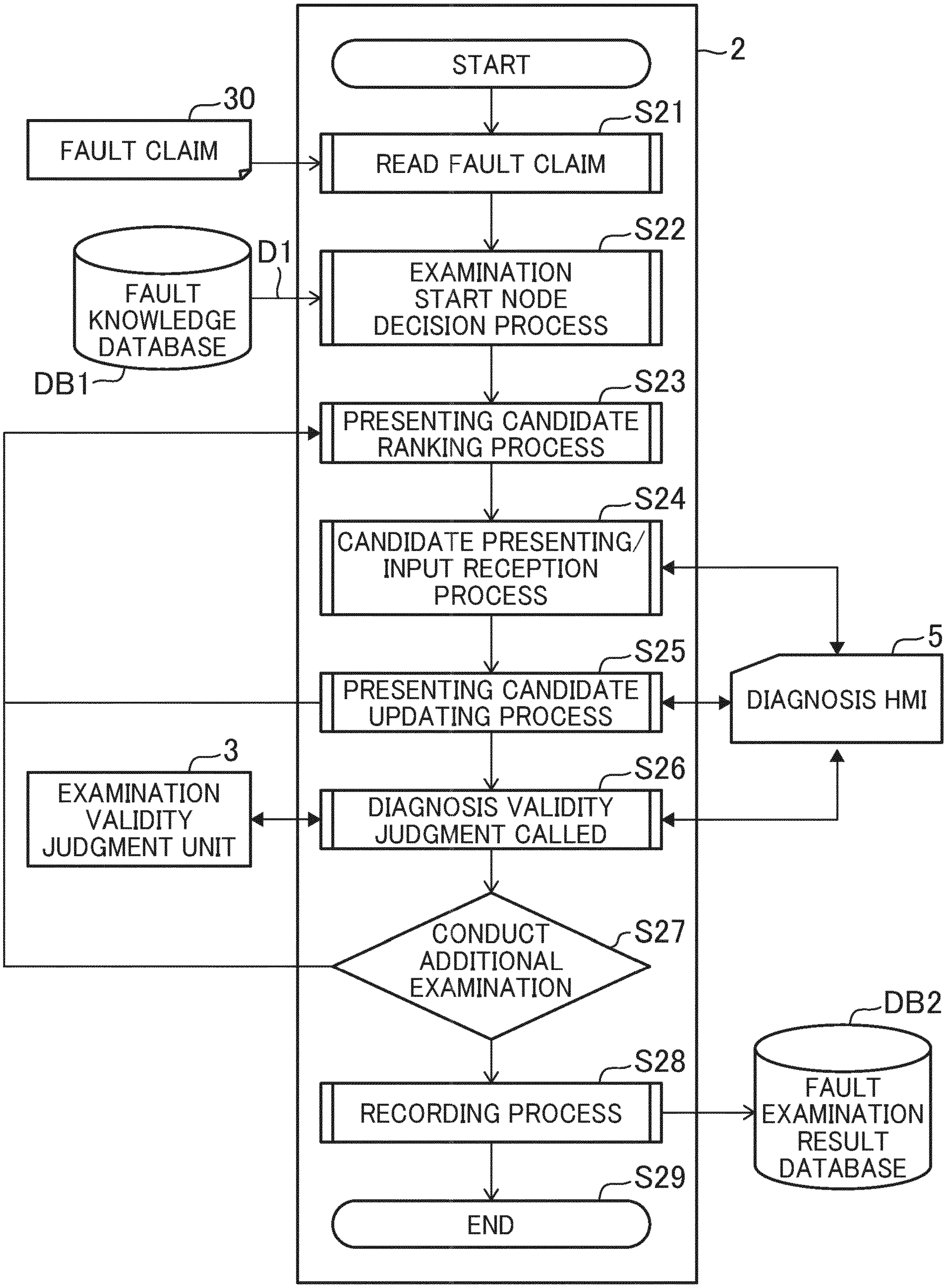
2
START
S21
READ FAULT CLAIM
30
FAULT CLAIM
S22
EXAMINATION START NODE DECISION PROCESS
D1
FAULT KNOWLEDGE DATABASE
DB1
S23
PRESENTING CANDIDATE RANKING PROCESS
S24
CANDIDATE PRESENTING/ INPUT RECEPTION PROCESS
5
DIAGNOSIS HMI
S25
PRESENTING CANDIDATE UPDATING PROCESS
3
EXAMINATION VALIDITY JUDGMENT UNIT
S26
DIAGNOSIS VALIDITY JUDGMENT CALLED
S27
CONDUCT ADDITIONAL EXAMINATION
DB2
S28
RECORDING PROCESS
FAULT EXAMINATION RESULT DATABASE
S29
END

# FIG. 8

30

| FAULT CLAIM REPORT | |
|---|---|
| TARGET EQUIPMENT | RAILWAY DOOR A |
| DATE AND TIME OF OCCURRENCE | 2019/3/29 12:00 |
| CONTENTS OF REPORT | DOOR OPENING TIME WAS LONG AT STATION AND SERVICE DELAYED |

# FIG. 9

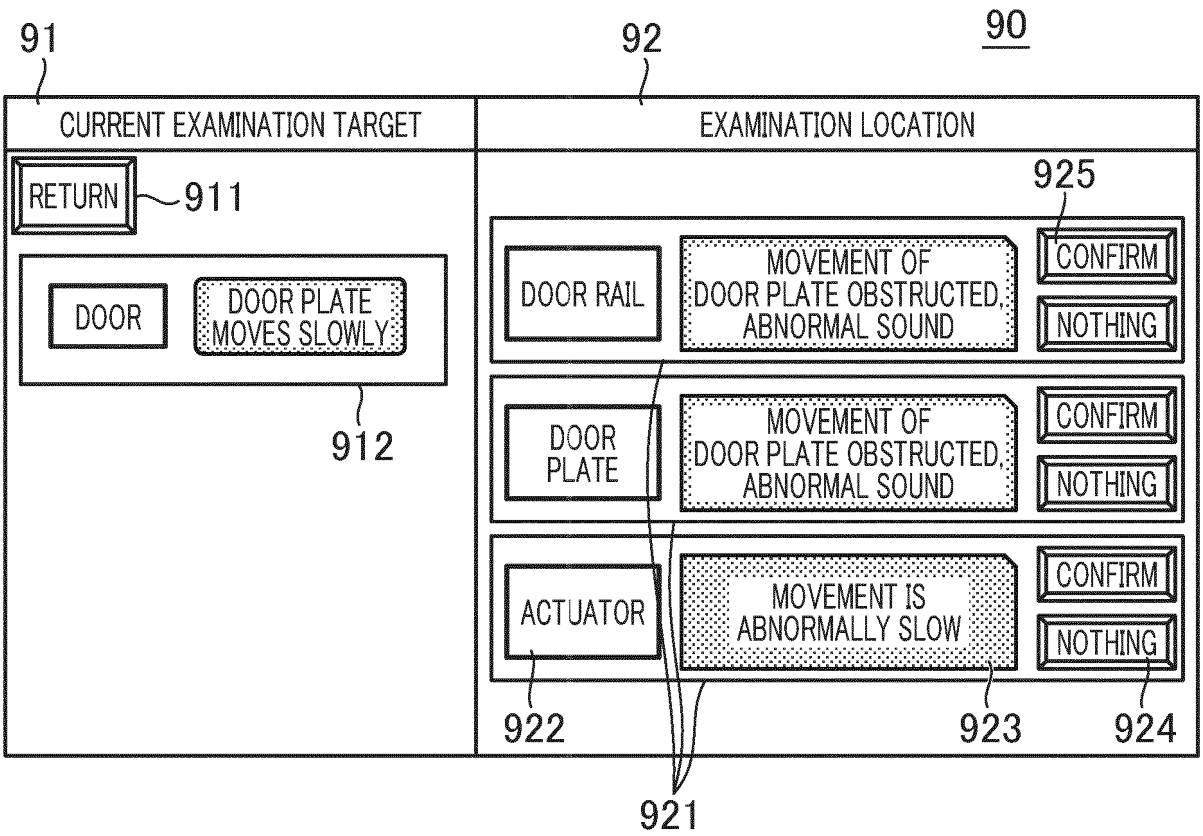

FIG. 10

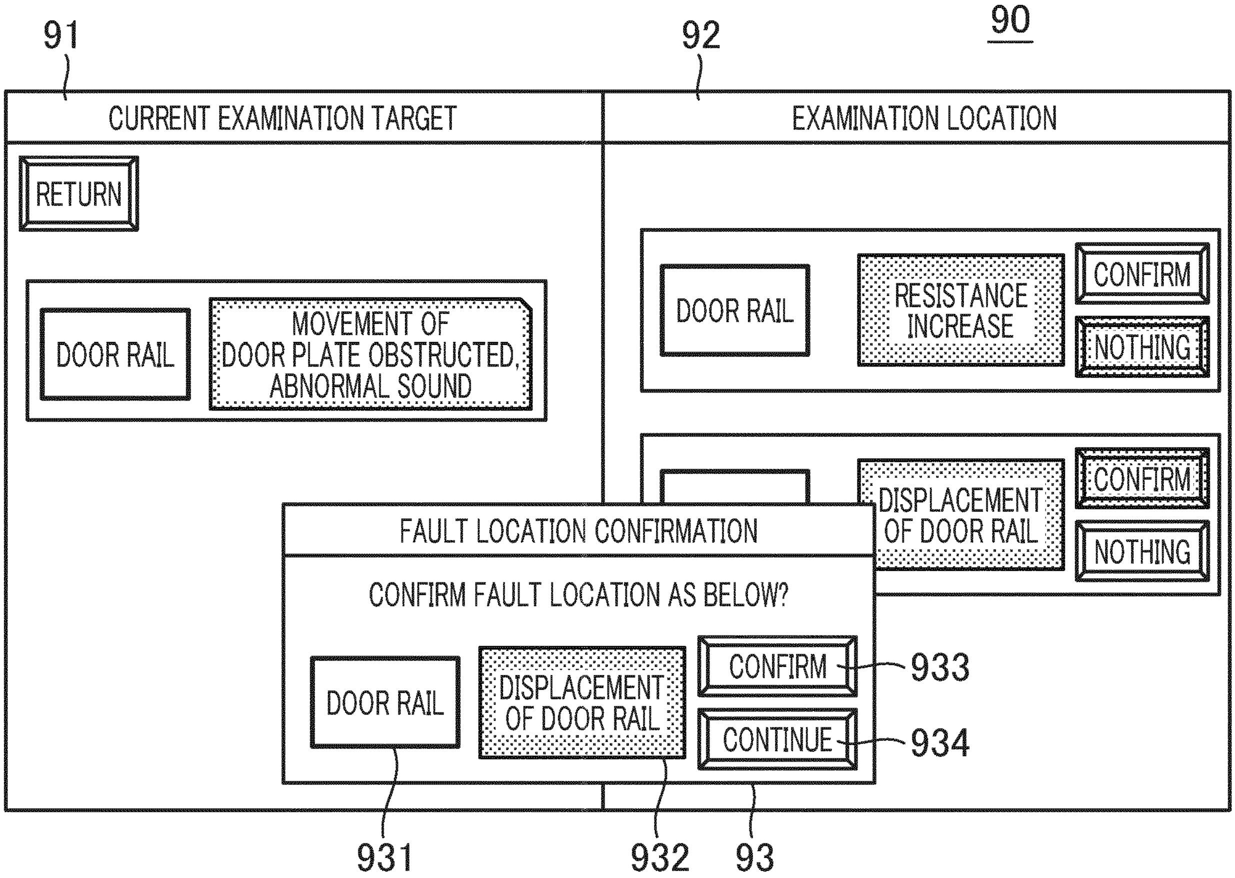
90
91
92
CURRENT EXAMINATION TARGET
EXAMINATION LOCATION
RETURN
DOOR RAIL
MOVEMENT OF DOOR PLATE OBSTRUCTED, ABNORMAL SOUND
DOOR RAIL
RESISTANCE INCREASE
CONFIRM
NOTHING
DISPLACEMENT OF DOOR RAIL
CONFIRM
NOTHING
FAULT LOCATION CONFIRMATION
CONFIRM FAULT LOCATION AS BELOW?
DOOR RAIL
DISPLACEMENT OF DOOR RAIL
CONFIRM
CONTINUE
933
934
931
932
93

FIG. 11

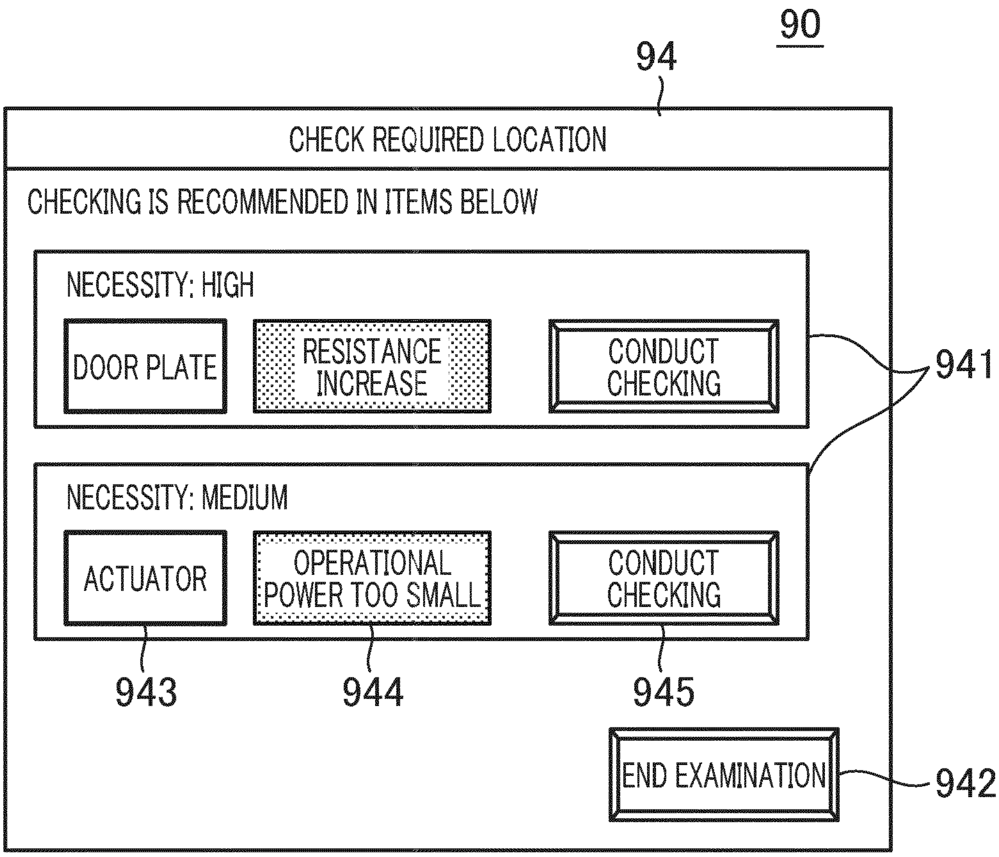
90
94
CHECK REQUIRED LOCATION
CHECKING IS RECOMMENDED IN ITEMS BELOW
NECESSITY: HIGH
DOOR PLATE
RESISTANCE INCREASE
CONDUCT CHECKING
941
NECESSITY: MEDIUM
ACTUATOR
OPERATIONAL POWER TOO SMALL
CONDUCT CHECKING
943
944
945
END EXAMINATION
942

FIG. 12

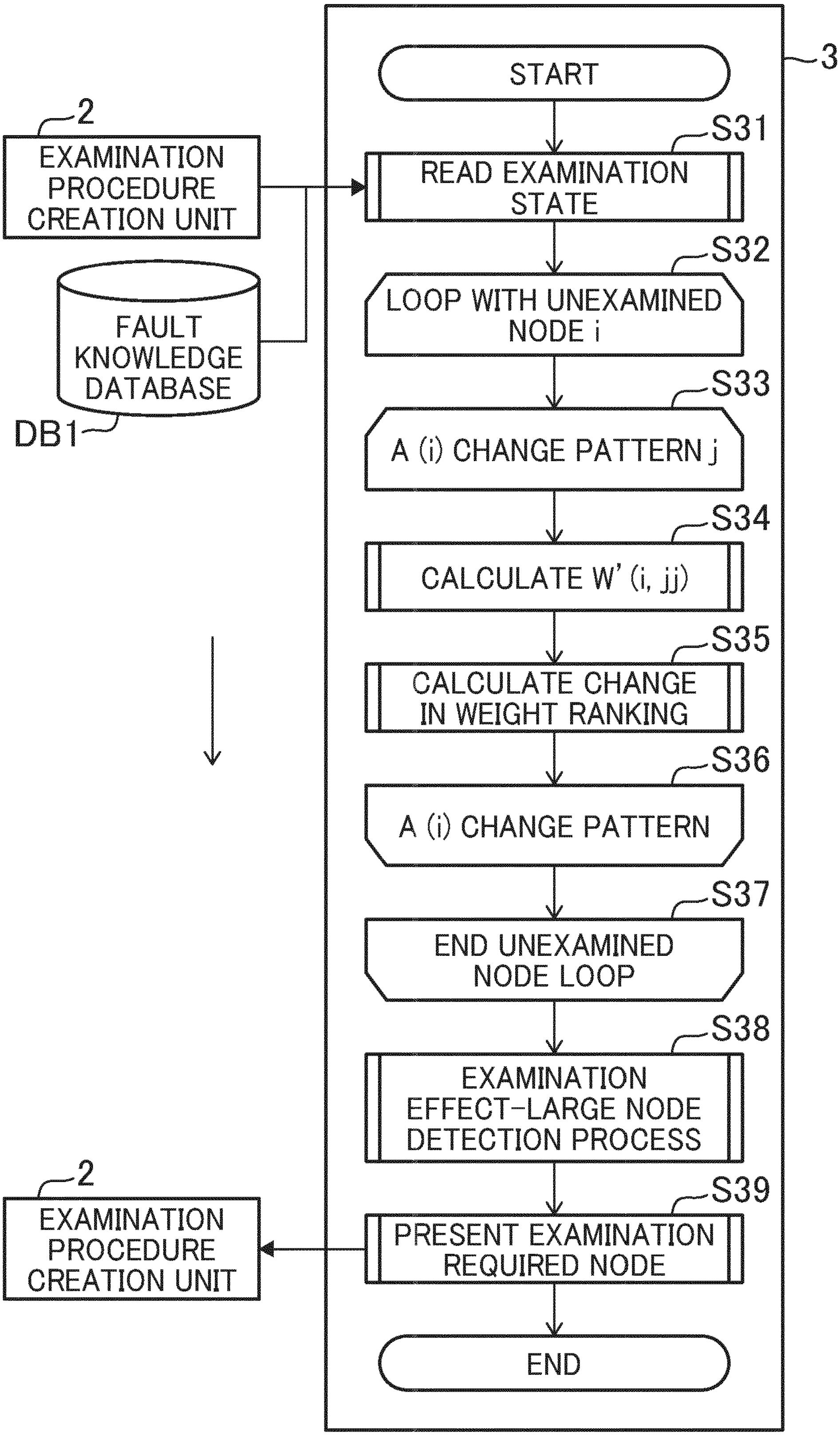
3
START
S31
READ EXAMINATION STATE
2
EXAMINATION PROCEDURE CREATION UNIT
FAULT KNOWLEDGE DATABASE
DB1
S32
LOOP WITH UNEXAMINED NODE i
S33
A (i) CHANGE PATTERN j
S34
CALCULATE W' (i, jj)
S35
CALCULATE CHANGE IN WEIGHT RANKING
S36
A (i) CHANGE PATTERN
S37
END UNEXAMINED NODE LOOP
S38
EXAMINATION EFFECT-LARGE NODE DETECTION PROCESS
S39
PRESENT EXAMINATION REQUIRED NODE
2
EXAMINATION PROCEDURE CREATION UNIT
END

FIG. 13

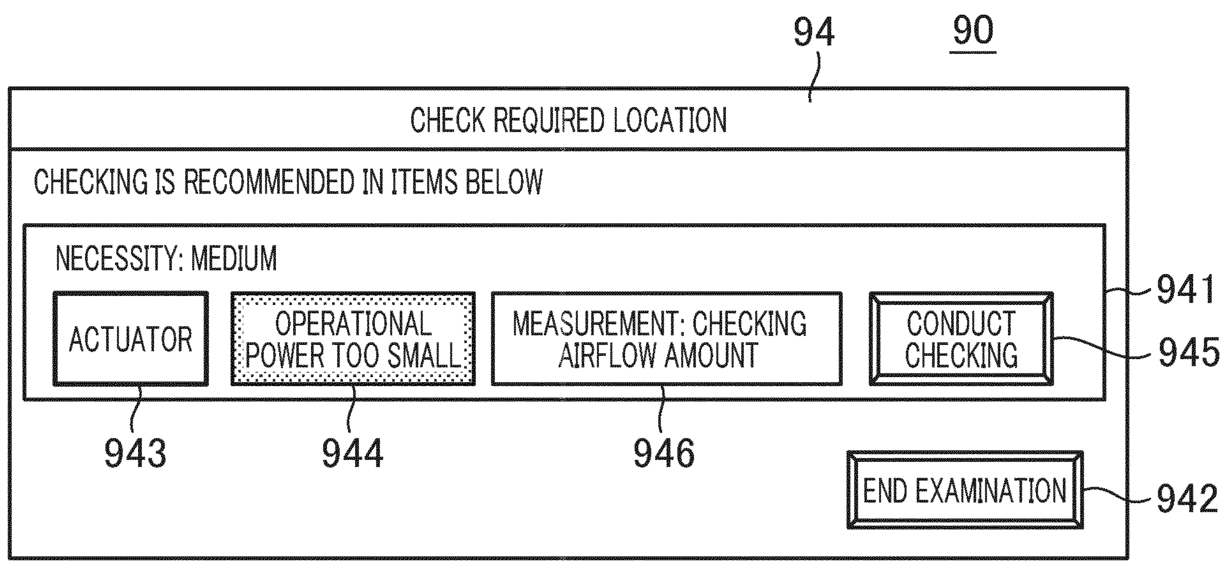
94
90
CHECK REQUIRED LOCATION
CHECKING IS RECOMMENDED IN ITEMS BELOW
NECESSITY: MEDIUM
ACTUATOR
OPERATIONAL POWER TOO SMALL
MEASUREMENT: CHECKING AIRFLOW AMOUNT
CONDUCT CHECKING
941
945
943
944
946
END EXAMINATION
942

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2007226540 A1
- EP 2778818 A1
- JP 2014174983 A